# EUROPEAN PATENT APPLICATION

(11) **EP 0 722 979 A1**
(43) Date of publication of application: **24.07.1996**
(21) Application number: 96100432.2
(22) Date of filing: 12.01.1996
(51) Int. Cl.: C08K 5/17, C08L 33/12

(54) **Substantially transparent antistatic acrylic polymer and process for producing same**

(30) Priority: 12.01.1995 US 371634
(71) Applicant: CYRO INDUSTRIES, Rockaway, NJ 07866 (US)
(72) Inventor: Zimmerman, Dan, Stratford, Connecticut 06497 (US); Georgacopoulos, Costas, Berlin, Connecticut 06037 (US); Numrich, Uwe, D-64331 Weiterstadt (DE)
(74) Representative: Diehl, Hermann, Dr. Dipl.-Phys.

(57) **Abstract**

Substantially transparent antistatic acrylic polymers are provided which comprise a methyl methacrylate polymer having incorporated therein an internal antistatic agent and other optional additives. Also provided is a particularly advantageous process for preparing such acrylic polymers, as well as uses of the acrylic polymers in various article applications.

## Description

The present invention relates generally to substantially transparent acrylic polymers and a process for producing same.

Acrylic polymers based on methyl methacrylate, including impact modified forms, are transparent, processible and possess a number of other physical and chemical properties making them suitable for use as molding resins for the production of a wide variety of useful articles. During and subsequent to the molding, such acrylic polymers tend to build up electrostatic charges which can attract dust, lint and other fine debris which render the article unsightly.

To combat this problem, antistatic surface treatments such as coatings can be applied to the molded article; however, this is generally only a temporary solution which must be periodically repeated. This also requires an additional processing step which adds to the processing time and cost.

It is also generally known to incorporate "internal" antistatic agents into polymers prior to molding, which internal antistatic agents are somewhat hydrophilic, relatively low molecular weight and with a slight incompatibility in the final composition. The theory is that such internal antistatic agents, due to their low molecular weight and slight incompatibility in the polymer matrix, tend to diffuse out of the polymer matrix to the surface ("bloom") forming a thin layer thereon. This thin hydrophilic layer attracts moisture which in turn helps dissipate any built up electrostatic charge.

The use of such internal antistatic agents tends to have a deleterious effect on the physical and especially the optical properties of the modified polymer. The higher the level of antistatic agent used, the greater the deleterious effect.

It is therefore the object of the present invention to overcome the above-mentioned drawbacks. This object is solved by the substantially transparent antistatic acrylic polymer compositions of independent claims 1 and 9 and the process for preparing a substantially transparent antistatic acrylic polymer composition of independent claim 19. Further advantageous features, aspects, and details of the present invention are evident from the dependent claims and the description. The claims are to be understood as a first nonlimiting approach to define the invention in general terms.

The substantially transparent acrylic polymers have been modified to provide rapid electrostatic charge decay while retaining their substantially transparent nature. More specifically, the present invention relates to acrylic polymers admixed with an internal antistatic additive, or combination of such antistatic additive with another type of additive, which show good processing characteristics, as well as maintenance of transparency and minimal build up of electrostatic charge. The present invention also relates to a process for preparing substantially transparent acrylic polymers which is conducted at temperatures less than the normal melt mixing temperature of the unmodified acrylic polymer.

A combination of an acrylic polymer with a specific type of internal antistatic agent has now been discovered in which the agent not only provides effective antistatic properties to the acrylic polymer, but also does not deleteriously affect the optical properties once incorporated. In addition, the use of this specific type of antistatic agent provides processing advantages as described below.

Further, a combination of an acrylic polymer, internal antistatic agent and a second additive (a polyalkylene glycol additive) has been discovered which not only maintains (or even betters) the optical properties of molded articles produced from the final product (as compared to the unmodified acrylic polymer), but also provides enhanced processing advantages.

Finally, a particularly advantageous method for incorporating internal antistatic agents (and other optional additives such as the polyalkylene glycol additive) into acrylic polymers has been discovered, which method allows processing at lower temperatures which, concurrently, provides an advantage to the optical properties of the final product. In particular, lower processing temperatures result in a minimization of yellowing and loss of transparency in the final product.

In accordance with the first aspect of the present invention, there is provided a substantially transparent, antistatic acrylic polymer composition comprising, in its overall concept, a methyl methacrylate polymer having incorporated therein an additive component comprising an internal antistatic agent in an amount sufficient to inhibit the build up of electrostatic charges on an article formed from the methyl methacrylate polymer, wherein the internal antistatic agent comprises an alkoxylated amine internal antistatic agent.

In accordance with the second aspect of the present invention, there is provided a substantially transparent antistatic acrylic polymer composition comprising, in its overall concept, a methyl methacrylate polymer having incorporated therein an additive component comprising:
(a) an internal antistatic agent in an amount sufficient to inhibit the build up of electrostatic charges on an article formed from the methyl methacrylate polymer, and
(b) a minor amount of a polyalkylene glycol additive as defined below.

In accordance with the third aspect of the present invention, there is provided a process for preparing a substantially transparent antistatic acrylic polymer comprising a methyl methacrylate polymer having incorporated therein an additive component comprising an internal antistatic agent in an amount sufficient to inhibit the build up of electrostatic charges on an article formed from the methyl methacrylate polymer, the process comprising the steps of:
(1) melt mixing the methyl methacrylate polymer with the additive component to form a concentrate, the amount of additive component in the concentrate being such that the melt processing temperature of the methyl methacrylate polymer is lowered by at least 5% (as compared to the unmodified methyl methacrylate polymer), but to no greater than 218°C (425°F); and
(2) letting down the concentrate by melt mixing the concentrate into additional methyl methacrylate polymer in an amount required to arrive at the composition of the substantially transparent antistatic acrylic polymer, the melt mixing occurring at a temperature below the melt processing temperature of the unmodified methyl methacrylate polymer.

As indicated earlier, this procedure allows easier processing of the methyl methacrylate polymers at lower temperatures which, in turn, maintains a better level of transparency and produces less yellowing in the final product.

Finally, the present invention provides substantially transparent, e.g. molded articles formed from the acrylic polymers as set forth above including, for example, lenses for the transportation industry, electronic and scientific equipment, and point of purchase displays.

These and other features and advantages of the present invention will be more readily understood by those of ordinary skill in the art from a reading of the following detailed description.

### Methyl Methacrylate Polymer

The methyl methacrylate polymers suitable for use in accordance with the present invention are substantially thermoplastic polymers containing units derived at least in part from methyl methacrylate, and preferably predominantly from methyl methacrylate, as well as blends thereof with other polymers including impact modifiers. Such methyl methacrylate polymers are well-known to those of ordinary skill in the art, as exemplified by United States Patent Nos. 3261887, 3354238, 4085166, 4228256, 4242469, 5061747 and 5290860, all of which are incorporated by reference herein for all purposes as if fully set forth.

In preferred embodiments, the methyl methacrylate polymers comprise units derived predominantly from methyl methacrylate and, optionally, one or more other free-radically polymerizable monovinyl comonomers including, for example, acrylates and methacrylates other than methyl methacrylate, acrylonitriles and methacrylonitriles, styrenes, vinyl ethers, vinyl halides, olefins and other similar monovinyl compounds. As specific examples suitable comonomers may be mentioned styrene, α-methyl styrene, methyl acrylate, ethyl acrylate, ethyl methacrylate, propyl acrylate, propyl methacrylate, butyl acrylate, butyl methacrylate, acrylonitrile and methacrylonitrile.

In general, the methyl methacrylate polymers preferred for use in the present invention should possess a molecular weight (Mw, weight average) of at least about 50000, and preferably in the range of from about 100000 to about 300000, and a glass transition temperature of at least about 50°C.

As a first example of a preferred methyl methacrylate polymer may be mentioned a polymer comprising units derived predominantly from methyl methacrylate and, optionally, minor amounts (e.g., 15 wt% or less, and preferably 5 wt% or less, based on the total monomer weight) of one or more other acrylates or methacrylates other than methyl methacrylate.

As a second example of a preferred methyl methacrylate polymer may be mentioned copolymers of:
(i) from about 50 to about 90 parts by weight, and more preferably from about 60 to about 80 parts by weight, of methyl methacrylate,
(ii) from about 10 to about 40 parts by weight, and more preferably from about 15 to about 30 parts by weight, of styrene, and
(iii) 0 to about 25 parts by weight, and more preferably 0 to about 20 parts by weight, of one or more monomers selected from the group consisting of methyl acrylate, ethyl acrylate and acrylonitrile,
the total of (i)+(ii)+(iii) comprising 100 parts by weight. As especially preferred embodiments thereof may be mentioned (1) a terpolymer of from about 60 to about 70 parts by weight of methyl methacrylate, about 20 parts by weight of styrene, and about 10 to about 20 parts by weight of acrylonitrile; and (2) a terpolymer of from about 70 to about 80 parts by weight of methyl methacrylate, about 15 to about 25 parts by weight of styrene, and about 5 parts by weight of methyl acrylate or ethyl acrylate.

In another preferred embodiment, the aforementioned methyl methacrylate polymers have incorporated therein an impact modifier to increase the toughness thereof. Such impact modifier should be compatible with the methyl methacrylate polymer so that the two systems can be dispersed into one another in small domain sizes, and should possess a refractive index substantially the same as that of the methyl methacrylate polymer, resulting in a resin with good transparency properties. Suitable such impact modifiers are in general well-known to those of ordinary skill in the art as exemplified in a number of the previously incorporated references.

As a first preferred type of impact modifier may be mentioned a grafted rubber such as a polybutadiene rubber grafted with one or more monomers such as, for example, acrylates and methacrylates, acrylonitriles and methacrylonitriles, styrenes, vinyl ethers, vinyl halides, olefins and other similar monovinyl compounds. As specific examples suitable comonomers may be mentioned styrene, α-methyl styrene, methyl acrylate, methyl methacrylate, ethyl acrylate, ethyl methacrylate, propyl acrylate, propyl methacrylate, butyl acrylate, butyl methacrylate, acrylonitrile and methacrylonitrile. In general, the weight ratio of rubber to graft monomers in the grafted rubber ranges from about 1:2 to about 6:1, and preferably from about 2:1 to about 4:1.

As a particularly preferred impact modifier of this first type may be mentioned polybutadienes having grafted thereon:
(i) from about 50 to about 95 parts by weight, and more preferably from about 60 to about 85 parts by weight, of methyl methacrylate,
(ii) from about 5 to about 40 parts by weight, and more preferably from about 15 to about 30 parts by weight, of styrene, and
(iii) 0 to about 25 parts by weight, and more preferably 0 to about 20 parts by weight, of one or more monomers selected from the group consisting of methyl acrylate, ethyl acrylate and acrylonitrile,
the total of (i)+(ii)+(iii) comprising 100 parts by weight, and the weight ratio of polybutadiene to graft monomers being in the range of from about 2:1 to about 4:1.

As a second preferred type of impact modifier may be mentioned acrylic copolymers of a core/shell structure, for example, those having a hard core of a poly (alkyl methacrylate), an intermediate stage of a butyl acrylate copolymer, and an outer shell of poly(methyl methacrylate).

The impact modifier may be incorporated into the methyl methacrylate polymer in widely varying amounts depending on the desired end properties, but is typically utilized in amounts of from about 5% to about 25% based upon the combined weight of the methyl methacrylate polymer and impact modifier.

Preferably, the methyl methacrylate polymer (with or without the impact modifier) should possess a transparency of no less than about 70%, and preferably no less than about 80% (as measured in accordance with ASTM D-1003), and/or a haze of no more than about 15%, and preferably no more than about 10% (as measured in accordance with ASTM D-1003). These transparency and/or haze requirements also preferably apply to the complete acrylic polymer compositions including all additives as described below.

Especially preferred methyl methacrylate polymers for use with the present invention are methyl methacrylate polymers commercially available under the trade designation of ACRYLITE®, and impact modified methyl methacrylate polymers commercially available under the trade designations XT®, CYROLITE® and ACRYLITE PLUS®, of CYRO Industries, Rockaway, New Jersey.

The aforementioned acrylic polymers may be produced via procedures well-known to those of ordinary skill in the art as exemplified by the previously incorporated references.

### Antistatic Agents

As suitable internal antistatic agents for use in accordance with various aspects of the present invention may be mentioned the well-known non-ionic, cationic and anionic types, as well as mixtures thereof. Of these, the non-ionic and anionic types are preferred.

As specific types of non-ionic internal antistatic agents may be mentioned polyethylene oxides, alkoxylated amines, alkoxylated alkanolamines, alkoxylated alcohols, alkoxylated acid amides. Preferred are the alkoxylated amines such as the ethoxylated tertiary amines and fatty amines.

As commercially available examples of suitable alkoxylated amine antistatic agents may be mentioned HOSTASTAT® M VN 38098 (Hoechst Celanese Corporation) and ATMER® 163 (ICI Americas Inc.).

As specific types of anionic internal antistatic agents may be mentioned the alkali and alkaline earth metal salts of alkyl sulfonates, alkyl sulfates, alkyl phosphonates, alkyl dithiocarbamates and alkyl carboxylates. Preferred are the alkali salts of alkyl sulfonates such as the sodium alkylsulfonates.

As a commercially available examples of a suitable anionic antistatic agent may be mentioned DEHYDAT® 7882 (Henkel Corp.).

In general, the antistatic agents may be incorporated in any amount sufficient to inhibit the build up of electrostatic charges on an article formed from the acrylic polymer, typically ranging from about 0.1 to about 10 wt% based upon the weight of the acrylic polymer. Preferably, when utilized, such additives are incorporated in amounts ranging from about 0.5 to about 5 wt%, and especially in amounts ranging from about 1 to about 3 wt%.

### Polyalkylene Glycol Additive

As indicated above, the acrylic polymer compositions in accordance with the present invention, in addition to internal antistatic agent, may also include a variety of other additives to the extent that such additives do not substantially affect the optical properties of the final product. A preferred such additional additive is a polyalkylene glycol selected from the group consisting of:
(i) polyethylene glycols having a number average molecular weight of at least about 200,
(ii) polypropylene glycols having a number average molecular weight of at least about 200, and
(iii) derivatives thereof.

In preferred embodiments, the polyalkylene glycol additives are solid or semi-solid at ambient conditions, and more preferably solid, and have number average molecular weights of at least about 600, more preferably at least about 1000, still more preferably in the range of about 1000 to about 20000, and especially in the range of from about 2000 to about 10000.

By "polyethylene glycol" is meant a polyalkylene glycol comprising predominantly ethylene oxide units. In addition to the ethylene oxide units, such polyethylene glycols may also optionally contain lesser amounts of other lower alkylene oxide units such as methylene oxide, propylene oxide and butylene oxide units. By "polypropylene glycol" is meant a polyalkylene glycol comprising predominantly propylene oxide units. In addition to the propylene oxide units, such polyethylene glycols may also optionally contain lesser amounts of other lower alkylene oxide units such as methylene oxide, ethylene oxide and butylene oxide units.

By a "derivative" of a polyalkylene glycol is meant the mono- or di-adducts formed by reacting one or both of the hydroxyl groups of the polyalkylene glycol with, for example, monoalcohols such as methanol, ethanol, propanols, butanols, ethylhexanols and stearyl alcohol (to produce mono- and diether adducts); and monoacids such as adipic acid, phthalic acid, stearic acid and acetic acid (to produce mono- and diesters).

Such polyalkylene glycols and derivatives thereof are generally well-known to those of ordinary skill in the art and readily commercially available from numerous sources.

Preferred for use with the present invention are the polyethylene glycols, and particularly the polyethylene glycols comprising essentially ethylene oxide units. Most preferred of these are those having a number average molecular weight of at least about 600, more preferably at least about 1000, and especially at least about 2000. Again, such polyethylene glycols are well-known to those skilled in the art and are readily available articles of commerce.

In general, such polyalkylene glycol additives may be incorporated in widely varying amounts typically ranging from about 0.1 to less than about 10 wt% based upon the weight of the acrylic polymer. Preferably, when utilized, such additives are incorporated in amounts ranging from about 0.5 to about 8 wt%, and especially in amounts ranging from about 1 to about 7.5 wt%.

### Additional Additives

In addition to the internal antistatic agents and polyalkylene glycol additives, the substantially transparent acrylic polymers in accordance with the present invention may optionally contain relatively minor amounts of other commonly utilized additives, with the proviso that such other additives are compatible with the acrylic polymers in the sense that the optical properties remain within the values stated earlier. As examples of such other additives may be mentioned lubricants such as stearyl alcohol, stearic acid, butyl stearate and the like; ultraviolet absorbers, hindered amine light stabilizers and antioxidants; plasticizers; fillers; and the like.

The additive component taken together (including the antistatic agent, polyalkylene glycol additive and other additives) should preferably not exceed about 10 wt%, and more preferably not exceed about 7.5 wt%, as levels above these may decrease certain advantageous physical and chemical properties of the unmodified methyl methacrylate polymer to unacceptable levels.

### Method of Preparing the Antistatic Acrylic Polymers

The internal antistatic agent and other optional additives may be incorporated into the acrylic polymer by any commonly utilized method for incorporating additives into such polymers, for example, by blending the components in an extruder. Preferably the method utilized is one that will intimately mix the components so that a substantially uniform mixture thereof occurs.

The substantially transparent antistatic acrylic polymers in accordance with the present invention are preferably prepared by the process of:
(1) melt mixing a methyl methacrylate polymer with an internal antistatic agent (and optional other additives) to form a concentrate, the amount of internal antistatic agent (and optional other additives) in the concentrate being such that the melt processing temperature of the methyl methacrylate polymer is lowered by at least 5%, and preferably at least 10% (as compared to the unmodified methyl methacrylate polymer) to no greater than 218°C (425°F), and preferably to no greater than 204°C (400°F); and
(2) letting down the concentrate by melt mixing the concentrate into additional methyl methacrylate polymer in an amount required to arrive at the desired composition of the antistatic acrylic polymer, the melt mixing occurring at a temperature below the melt processing temperature of the unmodified methyl methacrylate polymer.

It should be noted, in accordance with an aspect of the present invention, that this process is applicable to incorporation of antistatic agents in general and applies, therefore, to the production of substantially transparent antistatic acrylic polymer compositions comprising a methyl methacrylate polymer having incorporated therein, in an amount sufficient to inhibit the build up of electrostatic charges on an article formed from the methyl methacrylate polymer, an internal antistatic agent.

The low temperature processing of the acrylic polymer compositions in accordance with the present invention can be further enhanced by incorporating the polyalkylene glycol additive into the concentrate.

The concentrate should preferably contain greater than 10 wt% of the additive component based on the weight of the methyl methacrylate polymer therein.

This preferred process leads to lower processing temperatures which minimizes oxidation of the base polymer and, in turn, reduces yellowing and loss of transparency in the end product. The lower processing temperature also minimizes devolatilization of the antistatic agent thus render the final product more effective from an antistatic viewpoint over a longer period of time.

The concentrate can, for example, take the form of pellets which are added to additional unmodified methyl methacrylate polymer until the desired additive concentration is obtained. The resulting acrylic polymer composition can then be repelletized for later use, or can be fed directly into the molding operation which is advantageous where possible as such removes at least one additional processing step which may have a detrimental effect on the physical optical properties of the ultimate molded article.

### Articles Formed From the Acrylic Polymers

The acrylic polymers in accordance with the present invention find particular use as resins for shaped articles, which may be formed by any one of a variety of methods common for forming shaped articles from acrylic polymers. Such methods include, for example, molding, injection blow molding, extrusion molding, calendering, thermoforming, profile extrusion, sheet extrusion and the like. As indicated earlier, an especially preferred use of the acrylic polymers in accordance with the present invention is as a molding resin for use in forming shaped articles including, for example, lenses for the transportation industry (e.g., dashboard display lenses), electronic and scientific equipment, and point of purchase displays.

Although the present invention is described with reference to certain preferred embodiments, it is apparent that variations and modifications thereto may be made by those of ordinary skill in the art without departing from the scope of this invention as defined by the appended claims.

## Claims

1. A substantially transparent antistatic acrylic polymer composition comprising a methyl methacrylate polymer having incorporated therein an additive component comprising an internal antistatic agent in an amount sufficient to inhibit the build up of electrostatic charges on an article formed from the methyl methacrylate polymer, characterized in that the internal antistatic agent comprises an alkoxylated amine internal antistatic agent.

2. The substantially transparent acrylic polymer composition of claim 1, characterized in that the total amount of the additive component does not exceed about 10 wt% based on the weight of the methyl methacrylate polymer.

3. The substantially transparent acrylic polymer composition of claim 1 or 2, characterized in that the alkoxylated amine internal antistatic agent is present in an amount of from about 0.1 to about 10 wt% based on the weight of the methyl methacrylate polymer.

4. The substantially transparent antistatic acrylic polymer composition of one of the preceding claims, characterized in that the alkoxylated amine internal antistatic agent is a non-ionic one.

5. The substantially transparent acrylic polymer composition of claim 4 characterized in that the alkoxylated amine non-ionic internal antistatic agent is an ethoxylated amine internal antistatic agent.

6. The substantially transparent acrylic polymer composition of one of the preceding claims, characterized in that the additive component further comprises a polyalkylene glycol additive.

7. The substantially transparent acrylic polymer composition of claim 6, characterized in that the polyalkylene glycol additive is selected from the group consisting of (i) a polyethylene glycol having a number average molecular weight of at least about 200, (ii) a polypropylene glycol having a number average molecular weight of at least about 200, and (iii) a derivative of (i) or (ii).

8. The substantially transparent acrylic polymer composition of claim 7, characterized in that the polyalkylene glycol additive comprises a polyethylene glycol having a number average molecular weight of at least about 600.

9. A substantially transparent antistatic acrylic polymer composition comprising a methyl methacrylate polymer having incorporated therein an additive component comprising an internal antistatic agent in an amount sufficient to inhibit the build up of electrostatic charges on an article formed from the methyl methacrylate polymer, characterized in that the additive component further comprises a polyalkylene glycol additive, and/or that the total amount of the additive component does not exceed about 10 wt% based on the weight of the methyl methacrylate polymer.

10. The substantially transparent acrylic polymer composition of claim 9, characterized in that the polyalkylene glycol additive is selected from the group consisting of (i) a polyethylene glycol having a number average molecular weight of at least about 200, (ii) a polypropylene glycol having a number average molecular weight of at least about 200, and (iii) a derivative of (i) or (ii).

11. The substantially transparent acrylic polymer composition of claim 10, characterized in that the polyalkylene glycol additive comprises a polyethylene glycol having a number average molecular weight of at least about 600.

12. The substantially transparent acrylic polymer composition of one of claims 1 to 3 and 6 to 11, characterized in that the internal antistatic agent is selected from the group consisting of non-ionic internal antistatic agents, anionic internal antistatic agents and mixtures thereof.

13. The substantially transparent acrylic polymer composition of claim 12, characterized in that the internal antistatic agent is an alkoxylated amine non-ionic internal antistatic agent.

14. The substantially transparent antistatic acrylic polymer composition of claim 13, characterized in that the alkoxylated amine non-ionic internal antistatic agent is an ethoxylated amine internal antistatic agent.

15. The substantially transparent acrylic polymer of one of the preceding claims, characterized in that the internal antistatic agent is an alkali salt of an alkyl sulfonate internal antistatic agent.

16. The substantially transparent antistatic acrylic polymer of one of the preceding claims, possessing a transparency of no less than about 70% (as measured in accordance with ASTM D-1003), and/or a haze of no more than about 15% (as measured in accordance with ASTM D-1003).

17. The substantially transparent acrylic polymer composition of one of the preceding claims, characterized in that the methyl methacrylate polymer has further incorporated therein an impact modifier.

18. The substantially transparent antistatic acrylic polymer composition of one of the preceding claims, characterized in that the composition is a melt mixture of the methyl methacrylate polymer and additive component.

19. A process for preparing a substantially transparent antistatic acrylic polymer composition comprising a methyl methacrylate polymer having incorporated therein an additive component comprising an internal antistatic agent in an amount sufficient to inhibit the build up of electrostatic charges on an article formed from the methyl methacrylate polymer, the process comprising the steps of:
(1) melt mixing the methyl methacrylate polymer with the additive component to form a concentrate, the amount of additive component in the concentrate being such that the melt processing temperature of the methyl methacrylate polymer is lowered by at least 5% (as compared to the unmodified methyl methacrylate polymer), but to no greater than 218°C (425°F); and
(2) letting down the concentrate by melt mixing the concentrate into additional methyl methacrylate polymer in an amount required to arrive at the composition of the substantially transparent antistatic acrylic polymer, the melt mixing occurring at a temperature below the melt processing temperature of the unmodified methyl methacrylate polymer.

20. The process of claim 19, wherein the amount of additive component in the concentrate is such that the melt processing temperature of the methyl methacrylate polymer is lowered by at least 10% (as compared to the unmodified methyl methacrylate polymer), but to no greater than 204°C (400°F).

21. The process of claim 19 or 20, characterized in that the concentrate contains greater than 10 wt% of the additive component based on the weight of the methyl methacrylate polymer.

22. The process of one of claims 19 to 21, characterized in that the concentrate is in the form of pellets.

23. The process of one of claims 19 to 22, characterized in that the substantially transparent antistatic acrylic polymer composition is as set forth in any one of claims 1-18.

24. Articles comprising the substantially transparent antistatic acrylic polymer composition of one of claims 1 to 18 or the substantially transparent antistatic acrylic polymer composition produced according to one of claims 19 to 23.

25. Use of the substantially transparent antistatic acrylic polymer composition of one of claims 1 to 18 or the substantially transparent antistatic acrylic polymer composition produced according to one of claims 19 to 23 for the manufacturing of substantially transparent articles.
